# EUROPEAN PATENT APPLICATION

(11) **EP 4 815 334 A1**
(43) Date of publication of application: **30.09.2026**
(21) Application number: 25218630.9
(22) Date of filing: 26.11.2025
(51) Int. Cl.: H04B 7/185

(54) **DATA TRANSMISSION METHOD AND SYSTEM FOR LOW-ORBIT SATELLITE, ELECTRONIC DEVICE, AND STORAGE MEDIUM**

(30) Priority: 24.03.2025 CN 202510347017
(71) Applicant: Beijing Guodian Gaoke Science and Technology Co., Ltd, Beijing City 1000094 (CN)
(72) Inventor: LIU, Jinquan, Beijing (CN); LYU, Qiang, Beijing (CN); QIAO, Wenliang, Beijing (CN); DING, Jiangshuai, Beijing (CN); WANG, Zhiyong, Beijing (CN); WANG, Xinlei, Beijing (CN); MIAO, Shamin, Beijing (CN)
(74) Representative: Elkington and Fife LLP

(57) **Abstract**

The present disclosure relates to communication technology field and provides a data transmission method and system for low-orbit satellite data transmission, electronic device, and storage medium. The method includes: receiving the channel occupancy rate of the first preset number of sending cycles corresponding to each channel sent by the low-orbit satellite; determining, based on the channel occupancy rate of the preset number of sending cycles, a probability of allowing the terminal to send corresponding to each channel; obtaining a random number; and determining, based on a low order byte of the random number and the probability of allowing the terminal to send, the sending authority of the ground communication terminal. On the one hand, the ground communication terminal uses random channels for transmission, without the need for channel reservation, which eliminates the channel occupation of multiple interactive data communications and effectively improves the channel occupancy rate; On the other hand, based on the low order byte of the random number and the probability of allowing the terminal to send, the sending authority of the ground communication terminal is determined, which can effectively reducing the frequency of the ground communication terminal using congested channels, reducing collision probability, and avoiding complete channel blockage.

## Description

### TECHNICAL FIELD

The present disclosure relates to the technical field of communication, and particularly to a data transmission method and system for low-orbit satellite, electronic device, and storage medium.

### BACKGROUND

At present, low-orbit internet of things (IoT) satellite communication systems, due to their low speed and short transmission times, employ channel reservation for data communication. Although this approach can avoid collisions, the overall transmission efficiency is very low. Therefore, non-reservation transmission methods are typically adopted. To avoid communication failure caused by multiple devices using a same channel at a same time, a time-sharing transmission method can be used to reduce the channel occupancy rate, lower the collision probability, and increase the system capacity.

However, the low-orbit IoT satellite communication system can reduce the collision probability to a certain extent by adopting the time-sharing transmission method, but this method can only reduce the collision probability to a certain extent. When the number of online devices approaches or exceeds the system capacity, the collision probability increases significantly, even approaching 100%. When the collision probability is 100%, the channel reception success rate is almost 0, indicating that the channel is completely blocked. And once the phenomenon of complete channel blockage occurs, due to the increasing amount of data to be sent, the frequency of device channel preemption increases significantly, further exacerbating the complete channel blockage phenomenon and causing system paralysis.

### SUMMARY

The present disclosure provides a data transmission method and system for low-orbit satellite, electronic device, and storage medium to solve the problem of complete channel blockage in the existing low-orbit IoT satellite communication system using time-sharing transmission.

The present disclosure provides a data transmission method for low-orbit satellite, which is applied to a ground communication terminal and includes the following steps:
receiving a channel occupancy rate of a first preset number of sending cycles corresponding to each channel, and the channel occupancy rate is sent by a low-orbit satellite;
determining, based on the channel occupancy rate of the preset number of sending cycles, a probability of allowing the terminal to send corresponding to each channel; and
obtaining a random number, and determining, based on a low order byte of the random number and the probability of allowing the terminal to send, a sending authority of the ground communication terminal.

According to the data transmission method for low-orbit satellite provided by the present disclosure, the determining, based on the channel occupancy rate of the preset number of sending cycles, the probability of allowing the terminal to send corresponding to each channel includes:
obtaining a target channel occupancy rate;
determining, based on the target channel occupancy rate and the channel occupancy rate of the first preset number of sending cycles, a difference value in the channel occupancy rate corresponding to the first preset number of sending cycles; and
determining, based on the difference value in the channel occupancy rate, the probability of allowing the terminal to send.

According to the data transmission method for low-orbit satellite provided by the present disclosure, the preset number is three;

Correspondingly, the determining, based on the target channel occupancy rate and the channel occupancy rate of the first preset number of sending cycles, the difference value in the channel occupancy rate corresponding to the first preset number of sending cycles includes:
determining, based on the target channel occupancy rate, a first channel occupancy rate, a second channel occupancy rate, and a third channel occupancy rate, a difference value in the first channel occupancy rate, a difference value in the second channel occupancy rate, and a difference value in the third channel occupancy rate;
the determining, based on the difference value in the channel occupancy rate, the probability of allowing the terminal to send includes:
determining, based on the difference value in the first channel occupancy rate, the difference value in the second channel occupancy rate, and the difference value in the third channel occupancy rate, the probability of allowing the terminal to send.

According to the data transmission method for low-orbit satellite provided by the present disclosure, the determining, based on the difference value in the first channel occupancy rate, the difference value in the second channel occupancy rate, and the difference value in the third channel occupancy rate, the probability of allowing the terminal to send includes:
determining the probability of allowing the terminal to send according to a formula: $P = 255 * \left[1-0.1\left({e}_{n}-{e}_{n - 1}\right)-9.99{e}_{n}-0.2\left({e}_{n - 2}*{e}_{n - 1}+{e}_{n - 2}\right)\right]$
where P represents the probability of allowing the terminal to send, eₙ represents the difference value in the first channel occupancy rate, eₙ₋₁ represents the difference value in the second channel occupancy rate, and eₙ₋₂ represents the difference value in the third channel occupancy rate.

According to the data transmission method for low-orbit satellite provided by the present disclosure, the determining, based on the low order byte of the random number and the probability of allowing the terminal to send, a sending authority of the ground communication terminal includes:
determining, if the lower byte is less than or equal to the probability of allowing the terminal to send, the sending authority of the ground communication terminal as having sending authorization; and
determining, if the lower byte is greater than the probability of allowing the terminal to send, the sending authority of the ground communication terminal as giving up sending.

According to the data transmission method for low-orbit satellite provided by the present disclosure, after the determining, if the lower byte is less than or equal to the probability of allowing the terminal to send, the sending authority of the ground communication terminal as having sending authorization, the data transmission method for low-orbit satellite further includes:
randomly selecting a time slot to send.

The time slot is determined based on the sending cycle.

According to the data transmission method for low-orbit satellite provided by the present disclosure, and the channel occupancy rate of the first preset number of sending cycles is sent by the low-orbit satellite through broadcast announcement.

The present disclosure also provides a data transmission system for low-orbit satellite, includes the following units:
a receiving unit configured to receive a channel occupancy rate of a first preset number of sending cycles corresponding to each channel, and the channel occupancy rate is sent by a low-orbit satellite;
a first determination unit configured to determine, based on the channel occupancy rate of the preset number of sending cycles, a probability of allowing the terminal to send corresponding to each channel; and
a second determination unit configured to obtain a random number, and determine, based on a low order byte of the random number and the probability of allowing the terminal to send, a sending authority of the ground communication terminal.

The present disclosure also provides an electronic device, including a memory, a processor, and a computer program stored in the memory and executable on the processor. When executing the computer program, the processor implements any of the above-mentioned data transmission method for low-orbit satellite.

The present disclosure also provides a non-transitory computer-readable storage medium, on which a computer program is stored. When executed by a processor, the computer program implements any of the above-mentioned data transmission method for low-orbit satellite.

The present disclosure also provides a computer program product, including a computer program, when executed by a processor, the computer program implements any of the above-mentioned data transmission method for low-orbit satellite.

The data transmission method and system for low-orbit satellite, electronic device, and storage medium provided by the present disclosure receive a channel occupancy rate of a first preset number of sending cycles corresponding to each channel, and the channel occupancy rate is sent by a low-orbit satellite. And then, based on the channel occupancy rate of the first preset number of sending cycles, a probability of allowing the terminal to send corresponding to each channel is determined. Finally, a random number is obtained, and the sending authority of the ground communication terminal is determined based on a low order byte of the random number and the probability of allowing the terminal to send. On the one hand, the ground communication terminal uses random channels for transmission, without the need for channel reservation, which eliminates the channel occupation of multiple interactive data communications and effectively improves the channel occupancy rate; On the other hand, determining, based on the low order byte of the random number and the probability of allowing the terminal to send, the sending authority of ground communication terminal can effectively reduce the frequency of ground communication terminals using congested channels, reduce collision probability, and avoid complete channel blockage.

### BRIEF DESCRIPTION OF DRAWINGS

In order to more clearly illustrate the technical solutions of the present disclosure or the prior art, a brief introduction is given to the drawings required for the embodiment or the prior art description. It is obvious that the drawings described below are some embodiment of the present disclosure. For those skilled in the art, other drawings can be obtained according to these drawings without paying any inventive effort.
Figure 1 is a first flowchart of the data transmission method for low-orbit satellite according to the present disclosure.
Figure 2 is a second flowchart of the low-orbit satellite data transmission method according to the present disclosure.
Figure 3 is a schematic diagram of the structure of the data transmission system for low-orbit satellite according to the present disclosure.
Figure 4 is a schematic diagram of the structure of the electronic device according to the present disclosure.

### DESCRIPTION OF EMBODIMENTS

In order to make the objectives, technical solutions and advantages of the embodiments of the present disclosure clearer, the embodiments of the present disclosure are further described in detail below with reference to the drawings. Obviously, the described embodiment is a part of the embodiment of the present disclosure, not all of them. Based on the embodiment of the present disclosure, all other embodiment obtained by ordinary skilled persons in the art without paying any inventive effort are within the scope of protection of the present disclosure.

The terms "first", "second", etc. in the present disclosure are used to distinguish similar objects and are not used to describe a specific order or sequence. It should be understood that the data used in this way can be interchanged in appropriate circumstances, so that the embodiment of the present application can be implemented in order other than those illustrated or described herein, and the objects distinguished by "first", "second", etc. are usually of the same category.

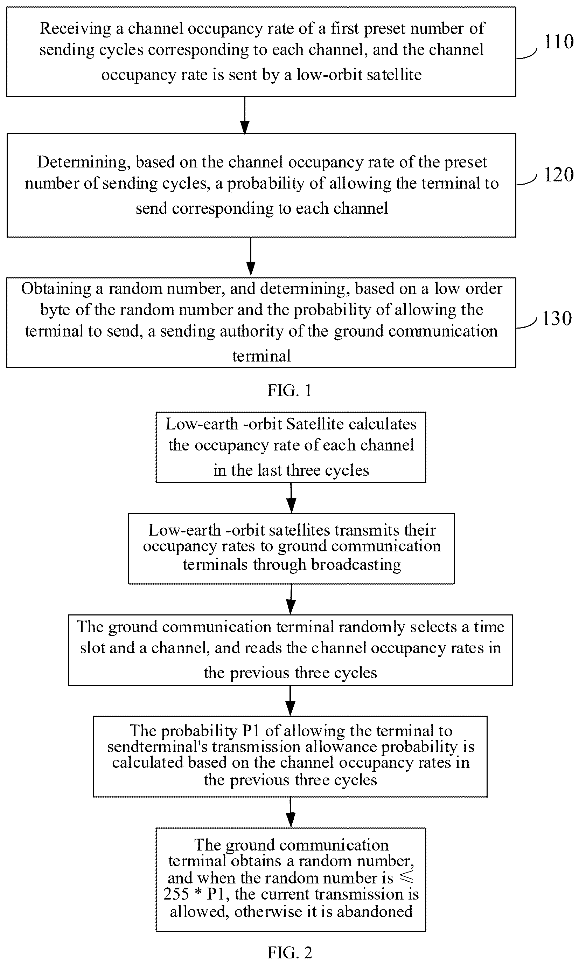

Figure 1 is a first flowchart of the data transmission method for low-orbit satellite according to the present disclosure. As shown in Figure 1, the method is applied to ground communication terminal and includes steps 110, 120, and 130.
Step 110: receiving a channel occupancy rate of a first preset number of sending cycles corresponding to each channel, and the channel occupancy rate is sent by a low-orbit satellite;
Step 120, determining, based on the channel occupancy rate of the preset number of sending cycles, a probability of allowing the terminal to send corresponding to each channel;
Step 130: obtaining a random number, and determining, based on a low order byte of the random number and the probability of allowing the terminal to send, a sending authority of the ground communication terminal.

Specifically, the execution entity of the embodiment of this disclosure is a ground communication terminal, which can receive the channel occupancy rate of the first preset number of sending cycles corresponding to each channel, and the channel occupancy rate is sent by a low-orbit (low-earth orbit) satellite. For example, the ground communication terminal can receive the channel occupancy rates of the first three sending cycles corresponding to each channel sent by the low-orbit satellite. For example, the ground communication terminal can receive the channel occupancy rates of the first four sending cycles corresponding to each channel sent by the low-orbit satellite, and the embodiment of the present disclosure do not specifically limit this.

Ground communication terminal refers to a device that directly communicates between users and low-orbit satellite. It can include fixed terminals such as residential user terminals; mobile terminals such as vehicle mounted, ship mounted, or portable terminals, used to maintain communication in mobile scenarios; and portable user terminals such as Mini user terminals, which are small in size, easy to carry, and suitable for outdoor use.

Here, channel occupancy rate refers to the ratio of the time a channel is effectively occupied to the total time within a certain time range, usually expressed as a percentage (%). It reflects the utilization efficiency of channel resources and is one of the important indicators for measuring the performance of communication systems.

It should be noted that the channel occupancy rate of the first preset number of sending cycles is sent by the low-orbit satellite through broadcast announcement. The low-orbit satellite calculates the occupancy rate of each channel in the previous cycle and broadcast the channel occupancy rate of the previous cycle to ground communication terminals before the next sending cycle.

After receiving the channel occupancy rate of the first preset number of sending cycles, the ground communication terminal can determine a probability of allowing the terminal to send corresponding to each channel based on the channel occupancy rate of the first preset number of sending cycles. Here, the target channel occupancy rate can be obtained. Based on the target channel occupancy rate and the channel occupancy rate of the first preset number of sending cycles, the difference value in the channel occupancy rate corresponding to the first preset number of sending cycles can be determined. Then, based on the difference value in the channel occupancy rate corresponding to the first preset number of sending cycles, the probability of allowing the terminal to send can be determined.

It can be understood that by analyzing the channel occupancy rate of the first preset number of sending cycles, the system can predict potential congestion points in advance and take preventive measures, such as adjusting channel allocation or guiding users to switch to other channels, thereby helping to reduce network congestion and improve user experience.

Among them, the probability of allowing the terminal to send refers to the probability that the ground communication terminal is allowed to send data at a certain moment in the communication system.

The probability of allowing the terminal to send is mainly used to avoid conflicts. In a scenario where multiple users share a channel, if multiple terminals send data simultaneously, it may lead to signal conflicts and reduce communication efficiency. By controlling the probability of allowing the terminal to send, the occurrence of conflicts can be reduced. Moreover, dynamically adjusting the probability of allowing the terminal to send based on the channel occupancy conditions can achieve load balancing and avoid overloading certain channels while others remain idle. Furthermore, by reasonably allocating the probability of allowing the terminal to send, the utilization efficiency of channel resources can be improved and the overall network performance can be enhanced.

Then, a random number can be obtained, and based on the low order byte of the random number and the probability of allowing the terminal to send, the sending authority of the ground communication terminal can be determined.

Here, the random number is a 32-bit binary random number. For example, if the random number is 101101011100101010100011110001, then the lower byte of the random number refers to the rightmost 8 bits of this 32-bit number, which is 11110001.

Here, in the case where the low byte is less than or equal to the probability of allowing the terminal to send, the sending authority of the ground communication terminal is determined to be allowed to send. In the case where the low byte is greater than the probability of allowing the terminal to send, the sending authority of the ground communication terminal is determined to be abandoned.

It should be noted that by comparing the low order byte of the random number with the probability of allowing the terminal to send, the low order byte of the random number can be converted to decimal numbers and then compared with the probability of allowing the terminal to send to determine the sending authority of the ground communication terminal.

The method provided in the embodiment of the present disclosure involves receiving the channel occupancy rate of the first preset number of sending cycles corresponding to each channel sent by a low-orbit satellite, determining the probability of allowing the terminal to send for each channel based on the channel occupancy rate of the first preset number of sending cycles, and finally obtaining a random number. Based on the low order byte of the random number and the probability of allowing the terminal to send, the sending authority of the ground communication terminal is determined. On the one hand, the ground communication terminal uses random channels for transmission, without the need for channel reservation, which eliminates the channel occupation of multiple interactive data communications and effectively improves the channel occupancy rate; On the other hand, based on the low order byte of the random number and the probability of allowing the terminal to send, determining the sending authority of the ground communication terminal can effectively reduce the frequency of ground communication terminals using congested channels, reduce collision probability, and avoid complete channel blockage.

Based on the above embodiment, step 120 includes:
Step 121, obtain a target channel occupancy rate;
Step 122, determining, based on the target channel occupancy rate and the channel occupancy rate of the first preset number of sending cycles, a difference value in the channel occupancy rate corresponding to the first preset number of sending cycles;
Step 123, determining, based on the difference value in the channel occupancy rate, the probability of allowing the terminal to send.

Specifically, the target channel occupancy rate can be obtained, which refers to the expected time proportion during which the channel is occupied in a communication system. It is usually used to evaluate the utilization efficiency of channel resources and network performance. It is an idealized metric used to guide network planning and optimization. In practical applications, the setting of target channel occupancy rate requires comprehensive consideration of various factors, such as network load capacity, user demand, availability of spectrum resources, and channel transmission efficiency. For example, in cognitive radio, the target channel occupancy rate can be used to optimize spectrum switching strategies to reduce the probability of switching failures.

Then, based on the target channel occupancy rate and the channel occupancy rate of the first preset number of sending cycles, a difference value in the channel occupancy rate corresponding to the first preset number of sending cycles can be determined. For example, if the target channel occupancy rate is 90%, the preset number of channels is 4, and the channel occupancy rates in the previous 4 cycles are all 100%, then the difference values in the channel occupancy rate for the 4 sending cycles are all 0.1.

Finally, after obtaining the difference value in the channel occupancy rate, the probability of allowing the terminal to send can be determined based on the difference in the channel occupancy rate.

The method provided in the embodiment of the present disclosure obtains the target channel occupancy rate, and based on the target channel occupancy rate and the channel occupancy rate of the first preset number of sending cycles, determines the difference value in the channel occupancy rate corresponding to the first preset number of sending cycles. Finally, based on the first, the probability of allowing the terminal to send is determined. This method dynamically adjusts the probability of allowing the ground communication terminal to send through the difference value in the channel occupancy rate, which can more efficiently utilize spectrum resources. When the channel occupancy rate is low, more terminals are allowed to send data, thereby improving spectrum utilization. In the case of high channel occupancy, reducing the probability of allowing the terminal to send can reduce the possibility of multiple terminals sending data simultaneously, thereby reducing the probability of data conflicts and improving the reliability of communication systems.

Based on the above embodiment, the first preset number is three;

Correspondingly, in the step 122, the determining, based on the target channel occupancy rate and the channel occupancy rate of the first preset number of sending cycles, the difference value in the channel occupancy rate corresponding to the first preset number of sending cycles includes:
Step 1221, determining, based on the target channel occupancy rate, a first channel occupancy rate, a second channel occupancy rate, and a third channel occupancy rate, a difference value in the first channel occupancy rate, a difference value in the second channel occupancy rate, and a difference value in the third channel occupancy rate;

In the step123, the determining, based on the difference value in the channel occupancy rate, the probability of allowing the terminal to send includes:
Step 1231, determining, based on the difference value in the first channel occupancy rate, the difference value in the second channel occupancy rate, and the difference value in the third channel occupancy rate, the probability of allowing the terminal to send.

Specifically, the first preset number is three, and accordingly, a difference value in the first channel occupancy rate, a difference value in the second channel occupancy rate, and a difference value in the third channel occupancy rate are determined, based on the target channel occupancy rate, the first channel occupancy rate, the second channel occupancy rate, and the third channel occupancy rate.

For example, if the target channel occupancy rate is 90%, and the first, second, and third channel occupancy rates in the previous 3 cycles are 50% (previous 3 cycles), 80% (previous 2 cycles), and 85% (previous cycle), respectively, then eₙ=-0.05, eₙ₋₁=-0.1, and eₙ₋₂=-0.4.

When the channel occupancy rates of the previous three cycles are all 100%, that is, when the occupancy rates of the first, second, and third channels are all 100%, then: eₙ=0.1, eₙ₋₁=0.1, eₙ₋₂=0.1.

Finally, the probability of allowing the terminal to send is determined, based on the difference value in occupancy rates of the first channel, the second channel, and the third channel.

For example, based on the following formula, the probability of allowing the terminal to send is determined: $P = 255 * \left[1-0.1\left({e}_{n}-{e}_{n - 1}\right)-9.99{e}_{n}-0.2\left({e}_{n - 2}*{e}_{n - 1}+{e}_{n - 2}\right)\right]$
where P represents the probability of allowing the terminal to send, eₙ represents the difference value in the first channel occupancy rate, eₙ₋₁ represents the difference value in the second channel occupancy rate, and eₙ₋₂ represents the difference value in the third channel occupancy rate.

According to the above embodiment, in the step 130, the determining, based on the low order byte of the random number and the probability of allowing the terminal to send, a sending authority of the ground communication terminal includes:
Step 131, determining, if the lower byte is less than or equal to the probability of allowing the terminal to send, the sending authority of the ground communication terminal as having sending authorization;
Step 132, determining, if the lower byte is greater than the probability of allowing the terminal to send, the sending authority of the ground communication terminal as giving up sending.

Specifically, when the low byte is less than or equal to the probability of allowing the terminal to send, the sending authority of the ground communication terminal is determined to be allowed to send. When the low byte is greater than the probability of allowing the terminal to send, the sending authority of the ground communication terminal is determined to be abandoned.

For example, sending is allowed when the lower byte of the random number is ≤ 255 * [1-0.1 (eₙ-eₙ₋₁) -9.99eₙ-0.2 (eₙ₋₂ * eₙ₋₁+eₙ₋₂)], otherwise the current sending is abandoned.

It can be understood that through this method, the system can dynamically adjust the terminal's sending behavior based on the current channel status and resource availability. When the low byte is less than or equal to the probability of allowing the terminal to send, the terminal is allowed to send data, which helps to fully utilize channel resources and avoid resource idle. On the contrary, when the low byte is greater than the probability of allowing the terminal to send, giving up sending can avoid channel overload and improve resource utilization efficiency.

Based on the above embodiment, after the determining, if the lower byte is less than or equal to the probability of allowing the terminal to send, the sending authority of the ground communication terminal as having sending authorization, the data transmission method for low-orbit satellite includes:
Randomly selecting a time slot to send;
The time slot is determined based on the sending cycle.

Specifically, the low-orbit satellite data transmission system includes a low-orbit communication satellite and a ground communication terminal. The low-orbit satellite data transmission system divides the frequency band into N channels according to parameters such as frequency bandwidth. The ground communication terminal adopts a periodic transmission method with a transmission period of T. The time period T of the sending cycle is divided into M time slot s, with each transmission occupying no more than one time slot, and a random time slot is selected for transmission each time.

Specifically, low-orbit satellite calculates the occupancy rate of each channel during the previous cycle. Broadcast the channel occupancy rate of the previous cycle to the ground communication terminal before the next sending cycle. When the ground communication terminal sends data, it randomly selects a time slot for transmission, and then randomly selects a channel to prepare for transmission.

By using broadcasting to announce channel occupancy rates, it is possible to improve channel utilization while avoiding complete channel blockage.

For example, if the target channel occupancy rate is set to 90%, and the channel occupancy rates in the previous 3 cycles are 50% (previous 3 cycles), 80% (previous 2 cycles), and 85% (previous cycle), then eₙ=-0.05, eₙ₋₁=-0.1, eₙ₋₂=-0.4, then 100% of the terminals in this cycle will be allowed to use the channel for transmission, and the channel occupancy rate will further increase;

When the channel occupancy rate is 100% in the previous three cycles, then eₙ=0.1, eₙ₋₁=0.1, eₙ₋₂=0.1, only 1 ‰ of terminals are allowed to use the channel for transmission in this cycle, which can effectively reduce the channel occupancy rate.

Based on any of the above embodiment, Figure 2 is the second flowchart of the data transmission method for the low-orbit satellite according to the present disclosure. As shown in Figure 2, the method includes:
Firstly, divide a sending cycle into several time slots, and the terminal randomly selects time slots and channels for data transmission.
1. Low-orbit Satellite calculates the occupancy rate of each channel in the last three cycles.
2.Low-orbit satellite transmits their occupancy rates to ground communication terminals through broadcasting.
3. The ground communication terminal randomly selects a time slot, and when a certain channel is randomly selected, the probability of allowing the terminal to send is calculated according to the formula P1=[1-0.1 (eₙ-eₙ₋₁) -9.99eₙ-0.2(eₙ₋₂*eₙ₋₁+eₙ₋₂)] by reading the occupancy rate of the channel broadcast by the low-orbit satellite.
4. The ground communication terminal generates a random number and takes the lowest byte of the random number. When the random number is ≤ 255 * P1, it is allowed to send, otherwise it is abandoned.

The Low-orbit satellite can effectively reduce the frequency of ground communication terminals using the channel, decrease collision probability, and avoid complete channel blockage by controlling the probability of allowing the ground communication terminal to send.

Below is a description of the data transmission system for low-orbit satellite provided by the present disclosure. The data transmission system low-orbit satellite described below can be referred to in correspondence with the data transmission method for low-orbit satellite described above.

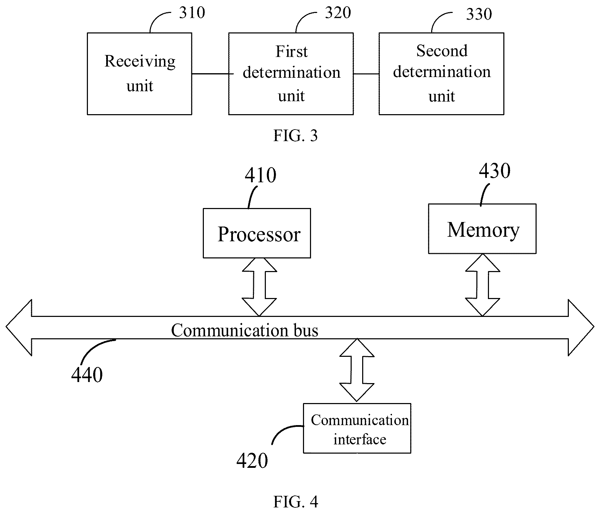

Based on any one of the above embodiment, the present disclosure provides a data transmission system for low-orbit satellite. Figure 3 is a schematic diagram of the structure of the data transmission system for the low-orbit satellite according to the present disclosure. As shown in Figure 3, the system including:
a receiving unit 310 configured to receive a channel occupancy rate of a first preset number of sending cycles corresponding to each channel, and the channel occupancy rate is sent by a low-orbit satellite;
a first determination unit 320 configured to determine, based on the channel occupancy rate of the preset number of sending cycles, a probability of allowing the terminal to send corresponding to each channels;
a second determination unit 330 configured to obtain a random number, and determine, based on a low order byte of the random number and the probability of allowing the terminal to send, a sending authority of the ground communication terminal.

The system provided in the embodiment of the present disclosure receives the channel occupancy rate of the first preset number of sending cycles corresponding to each channel sent by a low-orbit satellite. Based on the channel occupancy rate of the first preset number of sending cycles, terminal probability of allowing the terminal to send corresponding to each channel is determined. Finally, a random number is obtained, and the sending authority of the ground communication terminal is determined based on the low order byte of the random number and the probability of allowing the terminal to send. On the one hand, ground communication terminals use random channels for transmission, without the need for channel reservation, which eliminates the channel occupation of multiple interactive data communications and effectively improves the channel occupancy rate; On the other hand, based on the low order byte of the random number and the probability of allowing the terminal to send, determining the sending authority of ground communication terminal can effectively reduce the frequency of ground communication terminals using congested channels, reduce collision probability, and avoid complete channel blockage.

Based on any of the above embodiment, the first determination unit 320 specifically includes:
an acquisition unit configured to obtain the target channel occupancy rate;
a third determination unit configured to determine, based on the target channel occupancy rate and the channel occupancy rate of the first preset number of sending cycles, a difference value in the channel occupancy rate corresponding to the first preset number of sending cycles;
a fourth determination unit configured to determine, based on the difference value in the channel occupancy rate, the probability of allowing the terminal to send.

Based on any of the above embodiment, the first preset number is three;
Correspondingly, the third determination unit is specifically configured to:
   determine, based on the target channel occupancy rate, a first channel occupancy rate, a second channel occupancy rate, and a third channel occupancy rate, a difference value in the first channel occupancy rate, a difference value in the second channel occupancy rate, and a difference value in the third channel occupancy rate;
The fourth determination unit specifically includes:
   a fifth determination unit configured to determine, based on the difference value in the first channel occupancy rate, the difference value in the second channel occupancy rate, and the difference value in the third channel occupancy rate, the probability of allowing the terminal to send.

Based on any one of the above embodiment, the fifth determination unit is specifically configured to:
determine the probability of allowing the terminal to send based on the following formula: $P = 255 * \left[1-0.1\left({e}_{n}-{e}_{n - 1}\right)-9.99{e}_{n}-0.2\left({e}_{n - 2}*{e}_{n - 1}+{e}_{n - 2}\right)\right]$
where P represents the probability of allowing the terminal to send, eₙ represents the difference value in the first channel occupancy rate, eₙ₋₁ represents the difference value in the second channel occupancy rate, and eₙ₋₂ represents the difference value in the third channel occupancy rate.

Based on any of the above embodiment, the second determination unit 330 is specifically configured to:
determine, if the lower byte is less than or equal to the probability of allowing the terminal to send, the sending authority of the ground communication terminal as having sending authorization;
determine, if the lower byte is greater than the probability of allowing the terminal to send, the sending authority of the ground communication terminal as giving up sending.

Based on any one of the above embodiment, the data transmission system for low-orbit satellite further includes a random selection unit, and the random selection unit is specifically configured to:
randomly select a time slot to send.

The time slot is determined based on the sending cycle.

Based on any one of the above embodiment, the channel occupancy rate of the first preset number of sending cycles is sent by the low-orbit satellite through broadcast announcement.

Figure 4 is a schematic diagram of the structure of an electronic device according to the present disclosure. As shown in Figure 4, the electronic device includes aprocessor410, a communication interface 420, a memory 430, and a communication bus 440. The processor 410, communication interface 420, and memory 430 communicate with each other through the communication bus 440. The processor 410 can call logical instructions in the memory 430 to execute a data transmission method for low-orbit satellite, which includes: receiving the channel occupancy rate of the first preset number of sending cycles corresponding to each channel sent by the low-orbit satellite; determining, based on the channel occupancy rate of the preset number of sending cycles, a probability of allowing the terminal to send corresponding to each channel; obtaining a random number; and determining, based on a low order byte of the random number and the probability of allowing the terminal to send, the sending authority of the ground communication terminal.

In addition, the logical instructions in the aforementioned memory 430 can be implemented in the form of software functional units and can be stored in a computer-readable storage medium when sold or used as independent products. Based on this understanding, the technical solution of the present disclosure can essentially contribute to the existing technology or be reflected in the form of a software product. The computer software product is stored in a storage medium and includes several instructions to enable a computer device (which can be a personal computer, server, or network device, etc.) to perform all or part of the steps of the methods described in various embodiment of the present disclosure. The aforementioned storage medium includes: USB flash drives, portable hard drives, read-only memory (ROM), random access memory (RAM), magnetic disks or optical disks, and various other media that can store program code.

On the other hand, the present disclosure also provides a computer program product including a computer program that can be stored on a non-transitory computer-readable storage medium. When the computer program is executed by a processor, the computer can implement the data transmission method for low-orbit satellite provided by the above methods. The method includes: receiving the channel occupancy rate of the first preset number of sending cycles corresponding to each channel sent by the low-orbit satellite; determining, based on the channel occupancy rate of the preset number of sending cycles, a probability of allowing the terminal to send corresponding to each channel; obtaining a random number; and determining, based on a low order byte of the random number and the probability of allowing the terminal to send, the sending authority of the ground communication terminal.

On the other hand, the present disclosure also provides a non-transitory computer-readable storage medium, which stores a computer program. When the executed by a processor, the computer program implements the data transmission method for low-orbit satellite provided by the above methods. The method includes: receiving the channel occupancy rate of the first preset number of sending cycles corresponding to each channel sent by the low-orbit satellite; determining, based on the channel occupancy rate of the preset number of sending cycles, a probability of allowing the terminal to send corresponding to each channel; obtaining a random number; and determining, based on a low order byte of the random number and the probability of allowing the terminal to send, the sending authority of the ground communication terminal.

The above described embodiment of the device are only illustrative, where the units described as separate components may or may not be physically separated, and the components displayed as units may or may not be physical units, that is, they can be located in one place or distributed across multiple network units. Some or all of the modules can be selected according to actual needs to achieve the purpose of this embodiment. Ordinary technicians in this field can understand and implement without putting in inventive effort.

Through the description of the above implementation methods, technical personnel in this field can clearly understand that each implementation method can be implemented through software and necessary general hardware platforms, and of course, it can also be implemented through hardware. Based on this understanding, the above-mentioned technical solutions can essentially or contribute to existing technologies in the form of software products, which can be stored in computer-readable storage media such as ROM/RAM, magnetic disks, optical disks, etc., including several instructions to enable a computer device (which can be a personal computer, server, or network device, etc.) to execute the methods described in various embodiment or parts of the embodiment.

Finally, it should be noted that the above embodiment are only used to illustrate the technical solution of the present disclosure, and not to limit it; Although the present disclosure has been described in detail with reference to the aforementioned embodiment, those skilled in the art should understand that they can still modify the technical solutions described in the aforementioned embodiment, or equivalently replace some of the technical features; And these modifications or substitutions do not depart from the essence and scope of the corresponding technical solutions of the embodiment of the present disclosure.

## Claims

1. A data transmission method for low-orbit satellite, for use in a ground communication terminal, comprising:
receiving a channel occupancy rate of a first preset number of sending cycles corresponding to each channel, wherein the channel occupancy rate is sent by a low-orbit satellite;
determining, based on the channel occupancy rate of the preset number of sending cycles, a probability of allowing the terminal to send corresponding to each channel; and
obtaining a random number, and determining, based on a low order byte of the random number and the probability of allowing the terminal to send, a sending authority of the ground communication terminal.

2. The data transmission method for low-orbit satellite according to claim 1, wherein the determining, based on the channel occupancy rate of the preset number of sending cycles, the probability of allowing the terminal to send corresponding to each channel comprises:
obtaining a target channel occupancy rate;
determining, based on the target channel occupancy rate and the channel occupancy rate of the first preset number of sending cycles, a difference value in the channel occupancy rate corresponding to the first preset number of sending cycles; and
determining, based on the difference value in the channel occupancy rate, the probability of allowing the terminal to send.

3. The data transmission method for low-orbit satellite according to claim 2, wherein the first preset number is three;
correspondingly, the determining, based on the target channel occupancy rate and the channel occupancy rate of the first preset number of sending cycles, the difference value in the channel occupancy rate corresponding to the first preset number of sending cycles comprises:
determining, based on the target channel occupancy rate, a first channel occupancy rate, a second channel occupancy rate, and a third channel occupancy rate, a difference value in the first channel occupancy rate, a difference value in the second channel occupancy rate, and a difference value in the third channel occupancy rate;
wherein the determining, based on the difference value in the channel occupancy rate, the probability of allowing the terminal to send comprises:
determining, based on the difference value in the first channel occupancy rate, the difference value in the second channel occupancy rate, and the difference value in the third channel occupancy rate, the probability of allowing the terminal to send.

4. The data transmission method for low-orbit satellite according to claim 3, wherein determining, based on the difference value in the first channel occupancy rate, the difference value in the second channel occupancy rate, and the difference value in the third channel occupancy rate, the probability of allowing the terminal to send comprises:
determining the probability of allowing the terminal to send according to a formula: $P = 255 * \left[1-0.1\left({e}_{n}-{e}_{n - 1}\right)-9.99{e}_{n}-0.2\left({e}_{n - 2}*{e}_{n - 1}+{e}_{n - 2}\right)\right]$ where P represents the probability of allowing the terminal to send, eₙ represents the difference value in the first channel occupancy rate, eₙ₋₁ represents the difference value in the second channel occupancy rate, and eₙ₋₂ represents the difference value in the third channel occupancy rate.

5. The data transmission method for low-orbit satellite according to any one of claims 1 to 4, wherein the determining, based on the low order byte of the random number and the probability of allowing the terminal to send, a sending authority of the ground communication terminal comprises:
determining, if the lower byte is less than or equal to the probability of allowing the terminal to send, the sending authority of the ground communication terminal as having sending authorization; and
determining, if the lower byte is greater than the probability of allowing the terminal to send, the sending authority of the ground communication terminal as giving up sending.

6. The data transmission method for low-orbit satellite according to claim 5, wherein after the determining, if the lower byte is less than or equal to the probability of allowing the terminal to send, the sending authority of the ground communication terminal as having sending authorization, the data transmission method for low-orbit satellite further comprises:
randomly selecting a time slot to send;
wherein the time slot is determined based on the sending cycle.

7. The data transmission method for low-orbit satellite according to any one of claims 1 to 4, wherein the channel occupancy rate of the first preset number of sending cycles is sent by the low-orbit satellite through broadcast announcement.

8. A data transmission system for low-orbit satellite, comprising:
a receiving unit configured to receive a channel occupancy rate of a first preset number of sending cycles corresponding to each channel, wherein the channel occupancy rate is sent by a low-orbit satellite;
a first determination unit configured to determine, based on the channel occupancy rate of the preset number of sending cycles, a probability of allowing the terminal to send corresponding to each channel; and
a second determination unit configured to obtain a random number, and determine, based on a low order byte of the random number and the probability of allowing the terminal to send, a sending authority of the ground communication terminal.

9. An electronic device, comprising a memory, a processor, and a computer program stored in the memory and executable on the processor, wherein when executing the computer program, the processor implements the data transmission method for low-orbit satellite according to any one of claims 1 to 7.

10. A non-transitory computer-readable storage medium, storing a computer program, wherein when executed by a processor, the computer program implements the data transmission method for low-orbit satellite according to any one of claims 1 to 7.
